# EUROPÄISCHE PATENTSCHRIFT

(11) **EP 2 978 589 B1**
(45) Veröffentlichungstag und Bekanntmachung des Hinweises auf die Patenterteilung: **19.06.2019**
(21) Anmeldenummer: 14715877.8
(22) Anmeldetag: 28.03.2014
(51) Int. Cl.: B22F 3/105, B29C 64/153, B29C 64/20

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF POUR LA RÉALISATION D'UN OBJET TRIDIMENSIONNEL

(30) Priorität: 28.03.2013 DE 102013205724
(43) Veröffentlichungstag der Anmeldung: 03.02.2016
(73) Patentinhaber: EOS GmbH Electro Optical Systems, 82152 Krailling (DE); MTU Aero Engines AG, 80995 München (DE)
(72) Erfinder: DOMRÖSE, Robert Achim, 82110 Germering (DE); FREY, Michael, 85221 Dachau (DE); SCHILLING, Alexander, 81377 München (DE); DANZIG, André, 85235 Egenburg (DE); HAMANN, Jörg, 85053 Ingolstadt (DE); HEß, Thomas, 81541 München (DE); DIMTER, Marc, 70806 Kornwestheim (DE)
(74) Vertreter: Prüfer & Partner mbB Patentanwälte · Rechtsanwälte
(86) Internationale Anmeldenummer: PCT/EP2014/056323
(87) Internationale Veröffentlichungsnummer: WO 2014/154878

(56) Entgegenhaltungen:
- WO-A1-00/30789
- WO-A1-2008/116518
- WO-A1-2009/156316
- DE-A1-102004 031 881
- DE-C1- 19 649 865

## Beschreibung

Die vorliegende Erfindung bezieht sich auf ein Verfahren und eine Vorrichtung zum Herstellen eines dreidimensionalen Objektes durch schichtweises Verfestigen von Aufbaumaterial an den dem Querschnitt des herzustellenden Objektes in der jeweiligen Schicht entsprechenden Stellen durch Energieeinbringung.

Solche Verfahren werden beispielsweise zum rapid prototyping, rapid tooling und rapid manufacturing verwendet. Ein Beispiel eines solchen Verfahrens, das unter dem Namen "Selektives Lasersintern oder Laserschmelzen" bekannt ist, sowie eine zugehörige Vorrichtung zur Durchführung des Verfahrens sind in der Druckschrift DE 195 14 740 C1 beschrieben. Gemäß dieser Druckschrift wird zunächst mittels eines Beschichters eine dünne Schicht des pulverförmigen Aufbaumaterials aufgetragen und dieses anschließend an den dem jeweiligen Querschnitt des Objektes entsprechenden Stellen durch Einwirken eines Laserstrahls verfestigt. Diese beiden Schritte werden abwechselnd solange wiederholt, bis das herzustellende dreidimensionale Objekt fertiggestellt ist.

Dabei kann es für die mechanischen Eigenschaften des herzustellenden Objekts vorteilhaft sein, wenn der Laserstrahl die zu verfestigenden Stellen nicht immer in derselben Richtung abtastet. Dementsprechend beschreibt DE 10 2007 014 683 A1 ein Verfahren zum Herstellen eines dreidimensionalen Objekts, bei dem die Richtung von im wesentlichen parallelen Verfestigungslinien, auf denen der Laser die einem Querschnitt des herzustellenden Objektes entsprechenden Abschnitte der Pulverschicht abtastet, von Schicht zu Schicht um einen vorbestimmten Winkel gedreht wird. Außerdem beschreibt diese Druckschrift ein Verfahren, bei dem der abzutastende Bereich der Schicht in längliche Streifen unterteilt wird und die einzelnen Streifen durch aufeinanderfolgendes Abtasten mit dem Laserstrahl in einer Richtung quer zu der Längsrichtung der Streifen belichtet werden.

Beim Bestrahlen mit dem Laserstrahl entstehen je nach Art des verwendeten Materials, insbesondere beim Sintern oder Schmelzen von Metallen, Spratzer, Rauch und Dämpfe, die sich in den Bauraum hinein ausbreiten. Um zu verhindern, dass diese Verschmutzungen sich auf einem Einkoppelfenster für den Laserstrahl niederschlagen, schlägt DE 198 53 947 A1 einen Prozessraum vor, bei dem an zwei gegenüberliegenden Enden ein Schutzgas-Einlass und ein Schutzgas-Auslass angeordnet sind, durch die ein gerichteter Schutzgasstrom durch die Prozesskammer erzeugt wird. Durch diesen Schutzgasstrom werden die Verschmutzungen aus der Prozesskammer entfernt. Die DE 196 49 856 offenbart ebenfalls eine solche Vorrichtung wobei eine Schutzgasatmosphäre über der Wechselwirkungszone von Laserstrahl mit dem metallischen Werkstoffpulver aufrechterhalten wird.

Dennoch kann es dazu kommen, dass die Verschmutzungen in den optischen Pfad des Laserstrahls gelangen und durch eine Störung des Laserstrahls zu einer Beeinträchtigung der Qualität des hergestellten Objekts führen. Insbesondere können die mechanischen Eigenschaften des hergestellten Objekts verschlechtert sein. Die Aufgabe der vorliegenden Erfindung besteht daher darin, ein Verfahren und eine Vorrichtung zum Herstellen eines dreidimensionalen Objekts bereitzustellen, die in der Lage sind, eine Beeinträchtigung der Qualität des hergestellten Objekts durch aus dem bestrahlten Material austretende Spratzer, Rauch und/oder Dämpfe zu vermeiden und insbesondere die mechanischen Eigenschaften des hergestellten Objekts zu verbessern.

Die Aufgabe wird gelöst durch ein Verfahren gemäß Anspruch 1, eine Vorrichtung gemäß Anspruch 10 und ein Computerprogramm gemäß Anspruch 15. Weiterbildungen der Erfindung sind jeweils in den Unteransprüchen angegeben.

Dadurch, dass die Abtastrichtung des Energiestrahls und die Hauptströmungsrichtung des Gasstroms aufeinander abgestimmt werden, kann verhindert werden, dass aus dem bestrahlten Material austretende Spratzer, Rauch und/oder Dämpfe in den optischen Pfad des Laserstrahls gelangen und dadurch die Qualität des hergestellten Objekts beeinträchtigen und dessen mechanischen Eigenschaften verschlechtern. Daher ist es möglich, Objekte guter Qualität mit guten mechanischen Eigenschaften herzustellen. Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen der vorliegenden Erfindung geeignet ist.
- Fig. 2: ist eine schematische Darstellung des Vorgangs des Lasersinterns bzw. Laserschmelzens gemäß einer ersten Ausführungsform der vorliegenden Erfindung.
- Fig. 3: ist eine schematische Draufsicht auf eine Arbeitsebene der Lasersintervorrichtung zum Verdeutlichen eines Belichtungsverfahrens gemäß der ersten Ausführungsform.
- Fig. 4: ist eine schematische Darstellung des Abtastens einer geschlossenen Kontur gemäß der ersten Ausführungsform.
- Fig. 5: ist eine schematische Draufsicht auf eine Arbeitsebene der Lasersintervorrichtung zum Verdeutlichen eines Belichtungsverfahrens gemäß einer zweiten Ausführungsform der vorliegenden Erfindung.
- Fig. 6: a) und b) sind schematische Darstellungen von zwei alternativen Verläufen der Abtastung eines zu verfestigenden Bereichs durch einen Laserstrahl gemäß der zweiten Ausführungsform.
- Fig. 7: ist eine schematische Darstellung des Verlaufs der Abtastung eines zu verfestigenden Bereichs durch einen Laserstrahl gemäß einer dritten Ausführungsform der vorliegenden Erfindung.
- Fig. 8: ist eine schematische Draufsicht auf eine Arbeitsebene der Lasersintervorrichtung zum Verdeutlichen eines Belichtungsverfahrens gemäß einer vierten Ausführungsform der vorliegenden Erfindung.

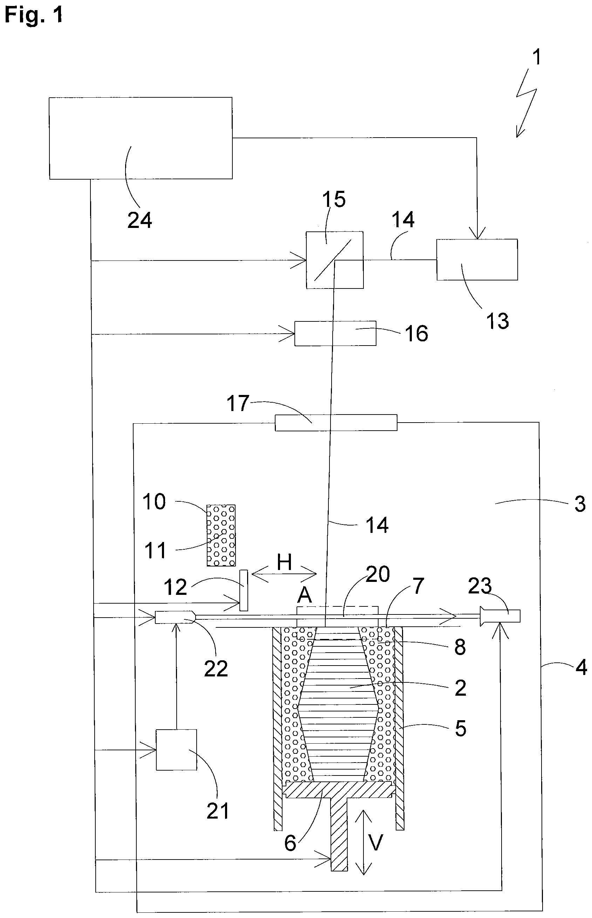

Im Folgenden wird mit Bezug auf Fig. 1 ein Ausführungsbeispiel einer Vorrichtung beschrieben, die zur Durchführung des erfindungsgemäßen Verfahrens geeignet ist. Die in Fig. 1 dargestellte Vorrichtung stellt eine Lasersinter- bzw. Laserschmelzvorrichtung 1 dar. Zum Aufbauen des Objekts 2 enthält sie eine Prozesskammer 3, die durch eine Kammerwand 4 nach außen abgeschlossen ist und als Bauraum für das Objekt dient.

In der Prozesskammer 3 ist ein nach oben offener Behälter 5 angebracht, in dem ein Träger 6 mit einer im wesentlichen ebenen und zu der Oberkante des Baubehälters im wesentlichen parallel ausgerichteten Oberseite angeordnet ist. Der Träger 6 dient zur Unterstützung des zu bildenden Objekts 2 und ist, wie in Fig. 1 durch einen vertikalen Doppelpfeil V angedeutet ist, über eine (nicht dargestellte) Höhenverstelleinrichtung in vertikaler Richtung bewegbar. Dabei wird der Träger 6 in vertikaler Richtung jeweils so eingestellt, dass die Oberseite einer neu zu verfestigenden Schicht in einer Arbeitsebene 7 liegt. In Fig. 1 ist das zu bildende Objekt 2 in einem Zwischenzustand dargestellt, in dem bereits eine Mehrzahl von Schichten pulverförmigen Aufbaumaterials selektiv verfestigt wurde und das Objekt 2 von unverfestigt gebliebenem Aufbaumaterial 8 umgeben ist.

Weiterhin enthält die Lasersintervorrichtung 1 einen Vorratsbehälter 10 zur Aufnahme eines durch elektromagnetische Strahlung verfestigbaren pulverförmigen Aufbaumaterials 11 und einen Beschichter 12 zum Aufbringen des Aufbaumaterials 11 auf die Arbeitsebene 7. Die vorliegende Erfindung ist besonders vorteilhaft für metallisches Aufbaumaterial. Der Beschichter 12 ist, wie in Fig. 1 durch einen horizontalen Doppelpfeil H angedeutet ist, in horizontaler Richtung parallel zu der Arbeitsebene beweglich.

Die Lasersintervorrichtung 1 weist ferner einen Laser 13 auf, der einen Laserstrahl 14 erzeugt. Der Laserstrahl 14 wird über eine Umlenkvorrichtung 15 umgelenkt und durch eine Fokussiervorrichtung 16 über ein Einkoppelfenster 17 in der Wand der Prozesskammer 3 auf einen vorbestimmten Punkt in bzw. unmittelbar unterhalb der Arbeitsebene 7 fokussiert. Durch die Umlenkvorrichtung 15 kann der Verlauf des Laserstrahls 14 so verändert werden, dass er die dem Querschnitt des herzustellenden Objektes 2 entsprechenden Stellen der aufgetragenen Schicht abtastet.

Weiter enthält die Lasersintervorrichtung 1 eine Vorrichtung zum Erzeugen eines Gasstroms 20, der über die Arbeitsebene 7 fließt. Diese Vorrichtung enthält wenigstens eine Zuführeinrichtung 21 für das Gas, wenigstens eine Blasdüse 22 auf einer Seite der Arbeitsebene 7 sowie wenigstens eine Saugdüse 23 auf einer gegenüberliegenden Seite der Arbeitsebene 7.

Schließlich ist eine Steuereinheit 24 vorgesehen, über die die Bestandteile der Vorrichtung in koordinierter Weise zum Durchführen des Bauprozesses gesteuert werden. Die Steuereinheit 20 steuert u.a. die Vertikalbewegung V des Trägers 6, die Horizontalbewegung H des Beschichters 12 und die Umlenkvorrichtung 15. Dabei steuert die Steuereinheit 20 die Umlenkvorrichtung 15 so, dass der Laserstrahl 14 die dem Querschnitt des herzustellenden Objektes 2 entsprechenden Stellen der aufgetragenen Schicht abtastet und an den nicht zu verfestigenden Stellen ausgeschaltet oder ausgeblendet ist. Die Steuereinheit kann auch die Leistung des Laserstrahls 14 abhängig von der Geometrie des herzustellenden Objektes 2 steuern. Gegebenenfalls werden auch die Fokussiervorrichtung 16, die Intensität des Lasers 13 und die Vorrichtung zum Erzeugen des Gasstroms 20 (z.B. das Ein- und Ausschalten des Gasstroms, seine Stärke, seine Richtung usw.) durch die Steuereinheit 24 gesteuert. Die Steuereinheit 24 kann eine CPU enthalten, deren Betrieb durch ein Computerprogramm gesteuert wird.

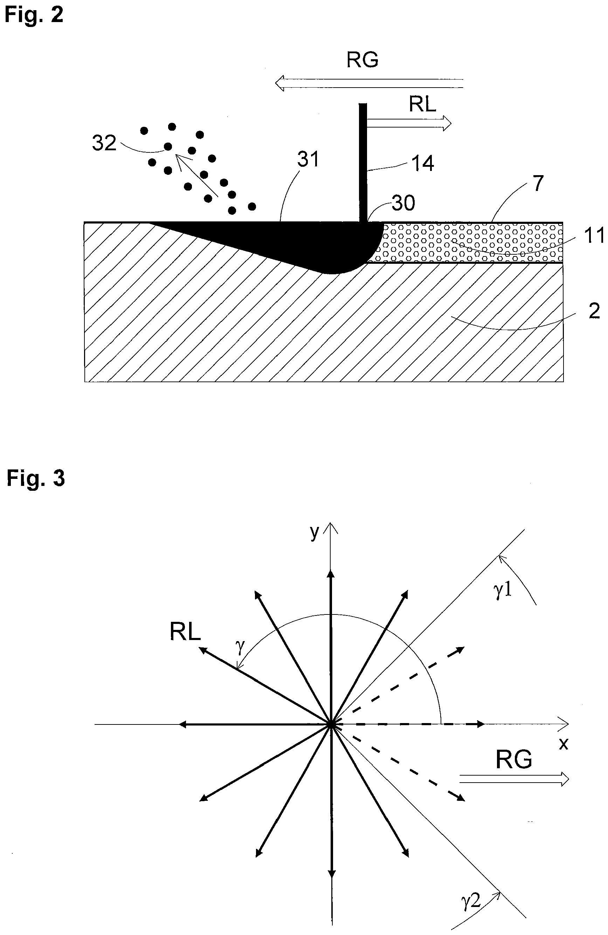

Im Folgenden wird mit Bezug auf Fig. 1 und 2 ein erfindungsgemäßer Betrieb der Lasersintervorrichtung 1 zum Herstellen eines dreidimensionalen Objekts gemäß einer ersten Ausführungsform beschrieben. Fig. 2 zeigt dabei vergrößert einen Ausschnitt A, der in Fig. 1 von einer gestrichelten Linie umrahmt ist.

Zum Aufbringen einer Pulverschicht wird der Träger 6 zunächst um eine Höhe abgesenkt, die der gewünschten Schichtdicke entspricht. Unter Verwendung des Beschichters 12 wird nun eine Schicht des pulverförmigen Aufbaumaterials 11 aufgetragen. Die Aufbringung erfolgt zumindest über den gesamten Querschnitt des herzustellenden Objekts, vorzugsweise über das gesamte Baufeld.

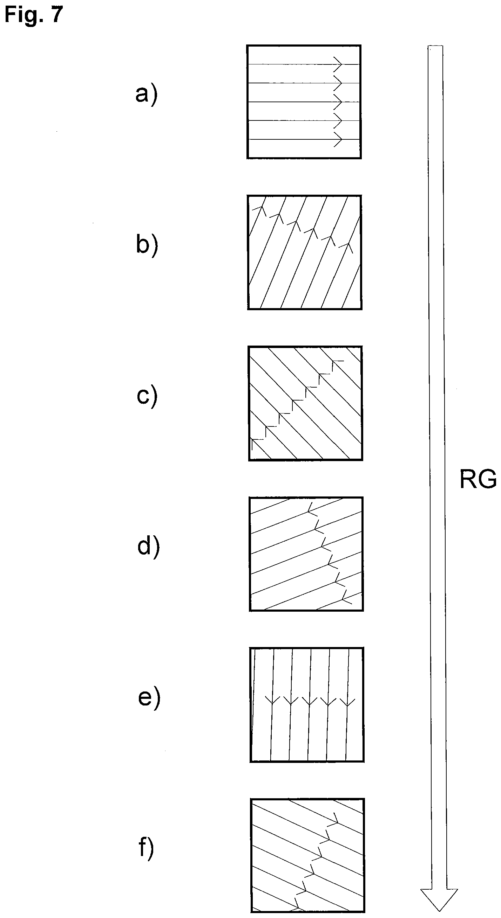

Anschließend wird der Querschnitt des herzustellenden Objekts von dem Laserstrahl 14 abgetastet, so dass das pulverförmige Aufbaumaterial 11 an diesen Stellen verfestigt wird. Das Abtasten kann in verschiedenen Belichtungsmustern erfolgen. Diese Belichtungsmuster können so gewählt werden, dass ein Verzug des herzustellenden Objekts minimiert wird. In der ersten Ausführungsform besteht das Belichtungsmuster wie in Fig. 7a) gezeigt aus zueinander parallelen Linien, die nacheinander in derselben Richtung abgetastet werden.

Diese Schritte werden solange wiederholt, bis das Objekt fertiggestellt ist und dem Bauraum entnommen werden kann.

Während des Abtastens des zu verfestigenden Bereichs durch den Laserstrahl 14 wird ein gerichteter Gasstrom horizontal entlang der Arbeitsebene 7 erzeugt. Die Hauptströmungsrichtung RG des Gasstroms 20 ist durch die Verbindungslinie zwischen der Blasdüse 22 und der Saugdüse 23 vorgegeben.

Gemäß der vorliegenden Erfindung werden die Hauptströmungsrichtung RG des Gasstroms G und die Abtastrichtung oder Abtastrichtungen RL des Laserstrahls 14, in der oder denen dieser die aufgetragene Pulverschicht abtastet, nicht unabhängig von einander gewählt, sondern aufeinander abgestimmt.

Bei dem in Fig. 2 gezeigten Beispiel ist ein Ausschnitt gezeigt, in dem die Abtastrichtung RL des Laserstrahls 14 von links nach rechts geht. Der Laserstrahl trifft in einem Auftreffpunkt 30 auf die Arbeitsebene 7 auf. Bezüglich der Abtastrichtung RL vor dem Auftreffpunkt 30 des Laserstrahls 14 gelegen befindet sich in der Arbeitsebene 7 pulverförmiges Aufbaumaterial 11, das beim Erreichen durch den Laserstrahl 14 ganz oder teilweise aufgeschmolzen bzw. verfestigt wird. Dadurch ergibt sich ein Bereich mit ganz oder teilweise geschmolzenem bzw. verfestigtem Material 31, der größtenteils bezüglich der Abtastrichtung RL hinter dem Auftreffpunkt 30 des Laserstrahls liegt. Aus diesem Bereich mit ganz oder teilweise geschmolzenem bzw. verfestigtem Material 31 treten je nach verwendetem Material Spratzer, Rauch und/oder Dämpfe 32 aus.

Die Hauptströmungsrichtung RG des Gasstroms 20 ist in Fig. 2 von rechts nach links dargestellt. Die Abtastrichtung RL verläuft also entgegengesetzt zu der Hauptströmungsrichtung RG. Dadurch werden Spratzer, Rauch und Dämpfe 32, die aus dem Bereich mit ganz oder teilweise geschmolzenem Material 31 austreten, ebenfalls nach links abgeleitet, also weg von dem Laserstrahl 14. Dadurch kann verhindert werden, dass aus dem bestrahlten Material austretende Spratzer, Rauch und Dämpfe 32 in den optischen Pfad des Laserstrahls 14 gelangen und dadurch die Qualität des hergestellten Objekts 2 beeinträchtigen und dessen mechanischen Eigenschaften verschlechtern. Daher ist es möglich, Objekte guter Qualität mit guten mechanischen Eigenschaften herzustellen.

Die in Fig. 2 dargestellte entgegengesetzte Orientierung von Abtastrichtung RL und Hauptströmungsrichtung RG bringt zwar die besten Ergebnisse, die vorliegende Erfindung ist aber nicht darauf eingeschränkt.

Fig. 3 zeigt eine Draufsicht auf die Arbeitsebene 7 der Lasersintereinrichtung 1 mit einem Koordinatensystem. Die Hauptströmungsrichtung RG des Gasstroms 20 geht dabei in die positive x-Richtung. Weiter sind verschiedene Vektoren der Abtastung durch den Laserstrahl 14 mit unterschiedlichen Abtastrichtungen RL gezeigt. Diese Abtastvektoren RL bilden jeweils mit der positiven x-Achse, also mit dem Vektor der Hauptströmungsrichtung RG, im mathematisch positiven Sinn einen Winkel γ, der von 22.5° bis 337.5° gehen kann. Die mit Bezug auf Fig. 2 beschriebene Anordnung entspricht also einem Winkel von 180° zwischen dem Abtastvektor RL und dem Hauptströmungsvektor RG (γ=180°). Sehr gute Ergebnisse lassen sich aber nicht nur für diesen Fall erzielen, sondern auch dann, wenn der Abtastvektor RL und der Hauptströmungsvektor RG in der Draufsicht auf die Arbeitsebene gesehen einen Winkel γ bilden, der zwischen 90° und 270° liegt (90°≤γ≤270°). In diesem Fall hat der Abtastvektor RL keine Komponente, die in die Richtung des Hauptströmungsvektors RG zeigt. Aber auch bei Winkeln y kleiner als 90° oder größer als 270°, bei denen der Abtastvektor RL eine Komponente hat, die in die Richtung des Hauptströmungsvektors RG zeigt, können noch gute Ergebnisse erzielt werden, solange die Komponente senkrecht zur Abtastrichtung RL groß genug ist, Spratzer, Rauch und Dämpfe 32 von dem Laserstrahl 14 wegzuhalten. Der Arbeitsbereich (Abtastvektoren in Fig. 3 durchgezogen dargestellt) liegt zwischen den beiden Grenzwinkeln γ1 und γ2 (γ1<γ<γ2). Abtastrichtungen RL zwischen 0° und γ1 oder zwischen γ2 und 360° (Abtastvektoren in Fig. 3 gestrichelt dargestellt) müssen vermieden werden. Die Grenzwinkel hängen von der Art des verwendeten Pulvers, der Laserleistungen, der Strömungsgeschwindigkeit des Gases und anderen Betriebsparametern der Vorrichtung ab. Im Allgemeinen lässt sich eine genügende Verbesserung der Objektqualität erzielen, wenn der Winkel γ zwischen dem Abtastvektor RL und dem Hauptströmungsvektor RG in der Draufsicht auf die Arbeitsebene 7 zwischen 22,5° und 337,5° liegt (22,5°≤γ≤337,5°). Vorzugsweise wird ein Bereich gewählt, der zwischen 45° und 315° liegt (45°≤γ≤315°), in weiter bevorzugter Weise zwischen 60° und 300° (60°≤γ≤300°), in noch weiter bevorzugter Weise zwischen 90° und 270° (90°≤γ≤270°). In Fig. 3 ist als Beispiel ein Fall gezeigt, bei dem die Grenzwinkel γ1 und γ2 zu γ1=45° und γ2=315° gewählt sind.

Gemäß der ersten Ausführungsform ist die Hauptströmungsrichtung RG des Gasstroms 20 fest. Mittels der Steuereinheit 24 wird die Abtastrichtung RL des Laserstrahls 14 auf diese feste Hauptströmungsrichtung RG abgestimmt. Die Abstimmung erfolgt derart, dass in einem Belichtungsmuster die Abtastrichtung oder Abtastrichtungen RL so gewählt wird oder werden, dass der Winkel zwischen der Abtastrichtung oder den Abtastrichtungen RL und Hauptströmungsrichtung RG in der Draufsicht auf die Arbeitsebene 7 die oben genannten Winkelbeziehungen erfüllt.

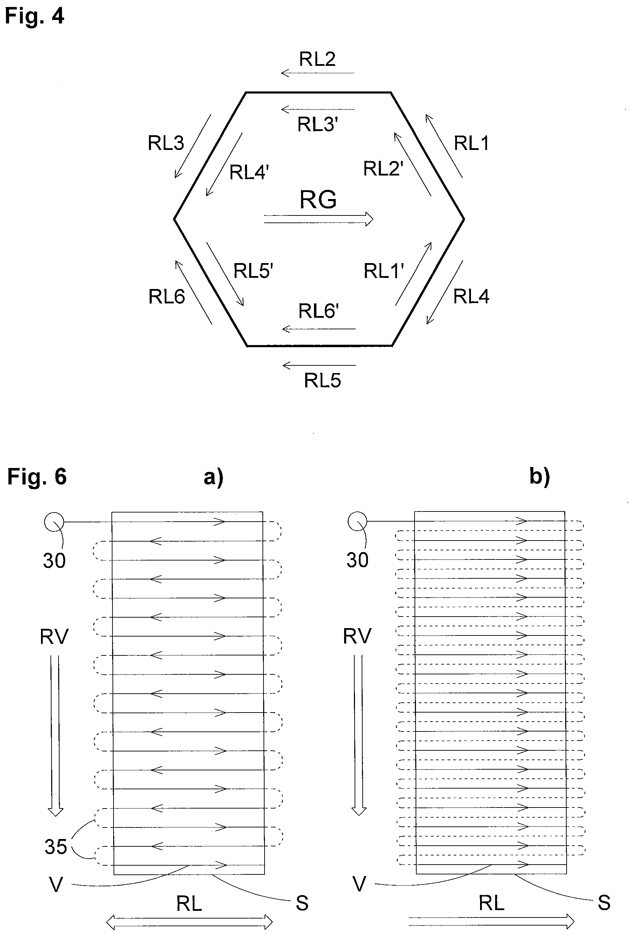

Fig. 4 zeigt schematisch ein Beispiel für das Abtasten einer geschlossenen Kontur. Die Kontur ist in diesem Beispiel ein Sechseck, das aus sechs Belichtungsvektoren gebildet ist. Die Hauptströmungsrichtung RG geht von links nach rechts. Normalerweise wird eine solche Kontur in einem Zug ohne Ausschalten oder Abblenden des Laserstrahls abgetastet. Dabei würde zumindest eine Strecke in der Hauptströmungsrichtung RG abgetastet, also in einem Winkel von γ=0°, was die eingangs geschilderten Nachteile bewirkt.

Gemäß der vorliegenden Erfindung kann diese Kontur beispielsweise so abgetastet werden, dass zuerst die Abtastvektoren RL1, RL2 und RL3 abgetastet werden, der Laserstrahl ausgeschaltet oder abgeblendet wird und dann vom selben Anfangspunkt aus die Abtastvektoren RL4, RL5 und RL6 abgetastet werden. Dabei liegt der Winkel γ zwischen dem Abtastvektor RL und der Hauptströmungsrichtung RG immer in einem Bereich von 90° bis 270°. Alternativ könnten auch zuerst die Abtastvektoren RL1', RL2', RL3', RL4' und RL5' abgetastet werden und nach Ausschalten oder Abblenden des Laserstrahls und Rückkehr zum Ausgangspunkt der Abtastvektor RL6'. Dabei liegt der Winkel γ zwischen dem Abtastvektor RL und der Hauptströmungsrichtung RG immer in einem Bereich von 60° bis 300°.

Somit lässt sich die Erfindung vorteilhaft auch anwenden, wenn die Abtastung mit dem Laserstrahl nicht nur in einer Richtung erfolgt, sondern mehrere Abtastrichtungen verwendet werden. Das im Zusammenhang mit der ersten Ausführungsform beschriebene Prinzip lässt sich auf beliebige Konturbelichtungen anwenden. Dabei wird das Unterbrechen und neu Ansetzen einer Konturbelichtung immer dann durchgeführt, wenn ansonsten die Bedingung γ<γ1 oder γ>γ2 erfüllt wäre. Es sind auch mehrere Unterbrechungen der geschlossenen Kontur möglich sowie das Zusammensetzen einer Kontur aus mehr als einem Polygonzug.

Eine zweite Ausführungsform der vorliegenden Erfindung unterscheidet sich von der ersten Ausführungsform in dem verwendeten Belichtungsmuster. Der dem Querschnitt des herzustellenden Objekts in einer Schicht entsprechende zu belichtende Bereich ist in längliche, parallel zu einander verlaufende Streifen S aufgeteilt, die nacheinander belichtet werden. Innerhalb jedes Streifens erfolgt die Belichtung in zueinander parallelen Vektoren V, die im Wesentlichen senkrecht zu der Längsrichtung des Streifens liegen. Bei der Belichtung des Streifens S ergibt sich ein Fortschreiten des durch den Laser verfestigten Bereichs in einer Vorschubrichtung RV, also in einer Richtung, in der die einzelnen Vektoren V nacheinander belichtet werden.

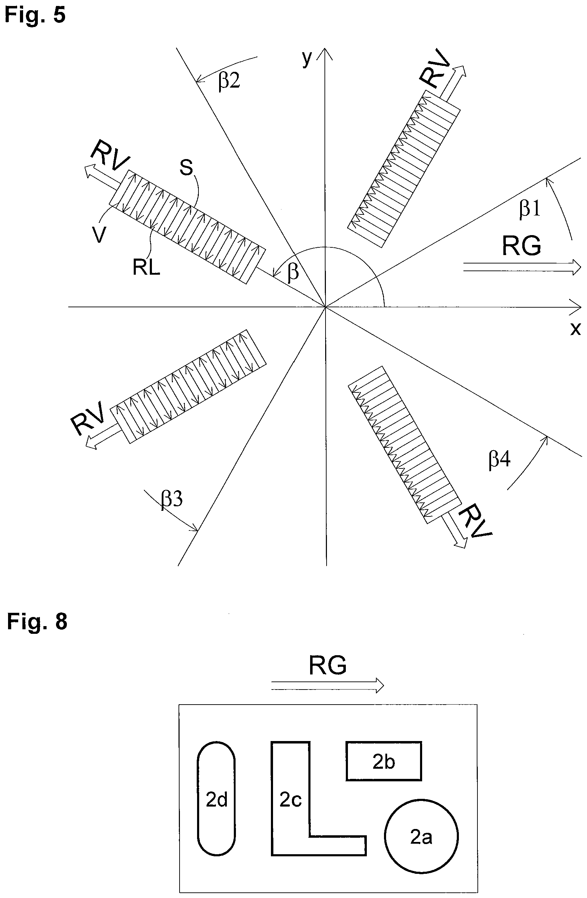

Fig. 5 ist eine schematische Draufsicht auf die Arbeitsebene 7 der Lasersintervorrichtung 1 zum Verdeutlichen des Belichtungsmusters der zweiten Ausführungsform. Wie in Fig. 3 geht die Hauptströmungsrichtung RG des Gasstroms 20 dabei in die positive x-Richtung des Koordinatensystems. Weiter sind beispielhaft für verschiedene Vorschubrichtungen RV jeweils ein einzelner Streifen S mit den darin enthaltenen Vektoren V gezeigt. Diese Vorschubrichtungen RV bilden jeweils mit der positiven x-Achse, also mit dem Vektor der Hauptströmungsrichtung RG, im mathematisch positiven Sinn einen Winkel β. In diesem Fall gibt es vier Grenzwinkel, die die Beziehung β1<β2<β3<β4 erfüllen, wobei die Bereiche zwischen 0° und β1 und zwischen β4 und 360° vermieden werden.

Der optimale Arbeitsbereich liegt zwischen den beiden Grenzwinkeln β2 und β3 (β2≤β≤β3). Damit der Winkel γ zwischen den Abtastrichtungen RL der Einzelvektoren V und der Hauptströmungsrichtung immer die bei der ersten Ausführungsform angegebenen Bereiche eingehalten werden, wird der Winkel β so gewählt, dass er in einem Bereich zwischen 112,5° und 247,5° liegt (112,5°≤β≤247,5°), vorzugsweise zwischen 135° und 225° (135°≤β≤225°), in weiter bevorzugter Weise zwischen 150° und 210° (150°≤β≤210°).

Innerhalb dieses Bereichs kann die Belichtung der einzelnen Streifen so durchgeführt werden, wie es in Fig. 6a dargestellt ist. Dort ist eine Kurve gezeigt, in der der Auftreffpunkt 30 des Laserstrahls 14 über einen Ausschnitt der Arbeitsebene 7 geführt wird. Die Abtastrichtungen RL zweier benachbarter Vektoren V sind einander entgegengesetzt. Die Umkehrbereiche 35 (in Fig. 6a gestrichelt dargestellt) liegen dabei außerhalb des zu belichtenden Bereichs des Streifens S. Der Laserstrahl 14 ist in diesen Bereichen ausgeschaltet oder ausgeblendet.

Ebenfalls gut geeignet sind die beiden Bereiche zwischen den Grenzwinkeln β1 und β2 (β1≤β≤β2) und zwischen den Grenzwinkeln β3 und β4 (β3≤β≤β4). Damit der Winkel γ zwischen den Abtastrichtungen RL der Einzelvektoren V und der Hauptströmungsrichtung RG immer die bei der ersten Ausführungsform angegebenen Bereiche eingehalten werden, wird die Belichtung der einzelnen Streifen in diesem Fall so durchgeführt, wie es in Fig. 6b dargestellt ist. Dabei haben alle Vektoren V dieselbe Abtastrichtung RL. Der Laserstrahl bleibt dabei nach der Umlenkung auf einer Seite des Streifens S ausgeschaltet oder ausgeblendet, bis er wieder die gegenüberliegende Seite des Streifens S erreicht hat und erneut umgelenkt worden ist. Die für alle Vektoren V gleiche Abtastrichtung RL wird dabei so gewählt, dass sie eine Komponente in negativer X-Richtung hat, oder anders ausgedrückt, dass der Winkel y zwischen den Abtastrichtungen RL der Einzelvektoren V und der Hauptströmungsrichtung RG zwischen 90° und 270° liegt. Diese Art der Belichtung kann natürlich auch in dem Bereich zwischen β2 und β3 angewandt werden. Da die in Fig. 6a gezeigte Art der Belichtung jedoch effizienter ist, wird diese in dem Bereich zwischen β2 und β3 bevorzugt angewandt.

Für die beiden Grenzwinkel β1 und β4 gelten dieselben Werte, wie sie in der ersten Ausführungsform für γ1 und γ2 angegeben sind, d.h. 22,5°, vorzugsweise 45° und in weiter bevorzugter Weise 60° für β1 und 337,5°, vorzugsweise 315° und in weiter bevorzugter Weise 300° für β4.

Durch die oben beschriebenen Belichtungsmuster für die verschiedenen Bereiche ist sichergestellt, dass sowohl die Winkel γ zwischen den Abtastrichtungen RL der Einzelvektoren V und der Hauptströmungsrichtung RG als auch die Winkel β zwischen den Vorschubrichtungen RV und der Hauptströmungsrichtung RG in den bei der ersten Ausführungsform angegebenen Winkelbereichen liegen.

Anstelle der Aufteilung des Querschnitts in längliche, parallel zu einander verlaufende Streifen S kann auch eine Aufteilung in Quadrate, Rauten oder andere geometrische Formen erfolgen, die nacheinander belichtet werden.

Eine dritte Ausführungsform der vorliegenden Erfindung unterscheidet sich von der ersten und zweiten Ausführungsform in dem verwendeten Belichtungsmuster. Fig. 7 ist eine schematische Darstellung des Verlaufs der Abtastung eines zu verfestigenden Bereichs durch einen Laserstrahl gemäß einer dritten Ausführungsform der vorliegenden Erfindung.

Hierbei wird zunächst eine Schicht wie in der ersten Ausführungsform beschrieben aufgebracht und belichtet (Fig. 7a). Dann wird eine weitere Schicht aufgebracht und belichtet. Die Abtastrichtung RL der zweiten Schicht ist gegenüber derjenigen der ersten Schicht um einen vorbestimmten Winkel gedreht (Fig. 7b). Es folgen weitere Schichten, wobei die Abtastrichtung RL bei jeder Schicht gegenüber derjenigen der vorhergehenden Schicht um den vorbestimmten Winkel gedreht ist (Fig. 7c-7f).

Die Hauptströmungsrichtung RG des Gasstroms 20 ist in Fig. 7 als von oben nach unten gehend dargestellt. In diesem Fall haben bei dem in Fig. 7e) gezeigten Schritt die Hauptströmungsrichtung RG und die Abtastrichtung RL fast dieselbe Richtung. Die Steuereinheit 24 kann in diesem Fall die Abtastrichtung RL dadurch auf die Hauptströmungsrichtung RG abstimmen, dass sie den in Fig. 7e) gezeigten Schritt überspringt und die Belichtung nach dem in Fig. 7d) gezeigten Schritt so steuert, wie es in Fig. 7f) gezeigt ist. Alternativ kann die Steuereinheit 24 die Abtastrichtung RL auf die Hauptströmungsrichtung RG abstimmen, dass sie die für diesen Schritt die Abtastrichtung RL ändert, vorzugsweise entgegen der vorgesehenen Abtastrichtung belichtet.

Eine vierte Ausführungsform der vorliegenden Erfindung bezieht sich auf die gleichzeitige Herstellung mehrerer Objekte 2 in einem Behälter 5. Fig. 8 ist eine schematische Draufsicht auf eine Arbeitsebene der Lasersintervorrichtung, wobei mehrere Objekte (2a-2d) bereits teilweise verfestigt sind. Erfindungsgemäß werden in jeder Schicht vorzugsweise zuerst die Objekte belichtet, die am weitesten in Richtung der Hauptströmungsrichtung RG angeordnet sind (d.h. die der Saugdüse 23 am nächsten liegen), im dargestellten Beispiel also das Objekt 2a. Die weitere Reihenfolge der Belichtung erfolgt entgegen der Hauptströmungsrichtung RG, d.h. es folgen das Objekt 2b und danach das Objekt 2c. Zuletzt werden die Objekte belichtet, die am wenigsten weit in Richtung der Hauptströmungsrichtung RG angeordnet sind (d.h. die der Blasdüse 23 am nächsten liegen), im dargestellten Beispiel also das Objekt 2d. Für die Belichtung der Einzelobjekte kann jedes der in der ersten bis dritten Ausführungsform genannten Belichtungsmuster oder eine Kombination daraus verwendet werden.

Diese Vorgehensweise kann nicht nur auf voneinander getrennte Bauteile angewendet werden, sondern auch auf voneinander getrennte Querschnittsteile desselben Objekts. Ebenso kann diese Vorgehensweise angewendet werden, wenn aneinandergrenzende Bereiche einer Querschnittsfläche einzeln aufeinanderfolgend belichtet werden.

Die Merkmale der beschriebenen Ausführungsformen können beliebig miteinander kombiniert werden. So kann beispielsweise in der dritten Ausführungsform anstelle des Belichtens einzelner Linien, wie sie in der ersten Ausführungsform beschrieben ist, auch eine Belichtung von Streifen angewandt werden, wie sie in der zweiten Ausführungsform beschrieben ist. Dabei ändert sich dann die Vorschubrichtung RV wie in Fig. 7a-f gezeigt von Schicht zu Schicht. Statt des in der dritten Ausführungsform beschriebenen Auslassens eines ungünstigen Schritts kann dann auch die in der zweiten Ausführungsform mit Bezug auf Fig. 6b beschriebene Änderung der Abtastrichtung der einzelnen Vektoren durchgeführt werden.

Analog zu den beschriebenen Ausführungsformen kann die vorliegende Erfindung auch auf beliebige andere Belichtungsmuster angewendet werden, z.B. auf schachbrett- oder rautenartige Belichtungsmuster. Es können auch weitere Belichtungsmuster oder-arten in der gleichen Schicht bzw. dem gleichen Objekt-Querschnitt verwendet werden, zum Beispiel Konturbelichtungen per Polygonzug, die nicht angepasst werden, zum Beispiel weil sie aufgrund ihrer Belichtungsparameter (Energiedichte, Verfahrgeschwindigkeit etc.) oder ihrer Position weniger ausschlaggebend für die mechanischen Eigenschaften des Objekts sind.

Die erfindungsgemäße Abstimmung zwischen der Abtastrichtung RL des Laserstrahls 14 und der Hauptströmungsrichtung RG des Gasstroms 20 muss nicht über den gesamten Querschnitt durchgeführt werden, sondern kann auch nur in einem Teilbereich des zu verfestigenden Querschnitts erfolgen, in dem die Qualitätsanforderungen besonders groß sind. In anderen Bereichen, z.B. dort wo die Aufbaugeschwindigkeit wichtiger als die mechanischen Eigenschaften ist, kann auf diese Abstimmung verzichtet werden.

Während die Abstimmung zwischen der Abtastrichtung RL des Laserstrahls 14 und der Hauptströmungsrichtung RG des Gasstroms 20 in den obigen Ausführungsformen dadurch erzielt wird, dass die Steuereinheit 24 bei vorgegebener Hauptströmungsrichtung RG die Abtastrichtung RL entsprechend wählt, kann die Steuereinheit 24 auch bei vorgegebener Abtastrichtung RL die Hauptströmungsrichtung RG auf diese Abtastrichtung RL abstimmen. Das kann z.B. dadurch realisiert werden, dass eine Mehrzahl von Blasdüsen 22 und eine Mehrzahl von Saugdüsen 23 ringförmig angeordnet sind und je nach gewünschter Hauptströmungsrichtung RG die dementsprechenden Düsen eingeschaltet und die anderen Düsen ausgeschaltet werden. Alternativ können die Blasdüse 22 und die Saugdüse 23 auch auf einem drehbaren Träger angeordnet sein, der je nach der gewünschten Hauptströmungsrichtung RG entsprechend gedreht wird. Die Steuereinheit 24 kann auch sowohl die Abtastrichtung RL bzw. die Vorschubrichtung RV als auch die Hauptströmungsrichtung RG ändern, um beide aufeinander abzustimmen.

Eine Unterbrechung der Belichtung, wie sie z.B. bei der Abtastung der in Fig. 4 gezeigten Kontur oder bei dem in Fig. 6b) gezeigten Belichtungsverlauf erfolgt, kann nicht nur durch Ausschalten oder Abblenden des Laserstrahls erfolgen, sondern auch dadurch, dass die Abtastung durch den Laserstrahl an diesen Stellen mit einer erhöhten Geschwindigkeit erfolgt, die groß genug ist, dass der Energieeintrag durch den Laserstrahl nicht zum Verfestigen des pulverförmigen Aufbaumaterials ausreicht.

Während die Vorrichtung zum Erzeugen eines Gasstroms in den obigen Ausführungsformen so beschrieben ist, dass sie eine Blasdüse und eine Saugdüse enthält, können auch eine Mehrzahl von Blasdüse auf einer Seite der Arbeitsebene und eine Mehrzahl von Saugdüsen auf der gegenüberliegenden Seite der Arbeitsebene jeweils nebeneinander angeordnet sein. Es können auch nur eine oder mehrere Blasdüse(n) oder nur eine oder mehrere Saugdüse(n) bereitgestellt sein. Die Vorrichtung kann so aufgebaut sein, dass der Gasstrom immer über die gesamte Arbeitsebene fließt, oder so, dass nur ein Teil der Arbeitsebene beströmt wird.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials durch Einwirkung von Energie angewendet werden, z.B. auch auf das Laserauftragsschweißen. So kann z.B. anstelle eines Lasers eine Leuchtdiode (LED), ein LED-Array, ein Elektronenstrahl oder jede andere Energie- bzw. Strahlenquelle, die geeignet ist, das pulverförmige Aufbaumaterial zu verfestigen, verwendet werden. Insbesondere bezieht sich die Erfindung allgemein auf das Herstellen eines gesamten Objekts allein mittels schichtweisen Auftragens und selektiven Verfestigens eines pulverförmigen Aufbaumaterials.

Als Aufbaumaterial können verschiedene Arten von Pulver verwendet werden, wie sie für das Lasersintern bzw. Laserschmelzen üblich sind, insbesondere Metall- oder Kunststoffpulver, oder gefüllte oder gemischte Pulver.

Als Gas für den Gasstrom wird vorzugsweise ein Inertgas, z.B. Argon oder Stickstoff verwendet. Die Erfindung kann jedoch auch angewendet werden, wenn anstelle eines Intertgases ein Prozessgas verwendet wird, das mit den am Prozess beteiligten Materialien reagiert, z.B. zu einer reaktiven Abscheidung des Pulvermaterials.

## Patentansprüche

1. Verfahren zum Herstellen eines dreidimensionalen Objekts (2) durch schichtweises Aufbringen und selektives Verfestigen eines pulverförmigen Aufbaumaterials (11) durch Einwirkung von Energie, mit den Schritten:
Aufbringen einer Schicht des pulverförmigen Aufbaumaterials (11) auf einen Träger (6) oder eine zuvor aufgetragene und zumindest selektiv verfestigte Schicht des Aufbaumaterials,
Abtasten der einem Querschnitt des herzustellenden Objektes (2) entsprechenden Stellen der aufgetragenen Schicht mit einem Energiestrahl (14) aus einer Energiequelle (13) zum selektiven Verfestigen des pulverförmigen Aufbaumaterials (11) und
Leiten eines Gasstroms (20) in einer Hauptströmungsrichtung (RG) über die aufgetragene Schicht während des Abtastens mit dem Energiestrahl (14),
**dadurch gekennzeichnet, dass** zumindest in einem Bereich des zu verfestigenden Querschnitts die Abtastrichtung (RL) des Energiestrahls (14) und die Hauptströmungsrichtung (RG) des Gasstroms (20) dadurch aufeinander abgestimmt werden, dass bei vorgegebener Hauptströmungsrichtung (RG) die Abtastrichtung (RL) entsprechend gewählt wird und/oder dass bei vorgegebener Abtastrichtung (RL) die Hauptströmungsrichtung (RG) auf diese Abtastrichtung RL abgestimmt wird,
wobei die Abtastrichtung (RL) des Energiestrahls (14) und die Hauptströmungsrichtung (RG) des Gasstroms (20) so aufeinander abgestimmt werden, dass der zwischen ihnen liegende Winkel (γ) in einem Bereich zwischen 22,5° und 337,5° liegt, vorzugsweise zwischen 45° und 315°, in weiter bevorzugter Weise zwischen 60° und 300° und in noch weiter bevorzugter Weise zwischen 90° und 270°.

2. Verfahren gemäß Anspruch 1, bei dem
der dem Querschnitt des herzustellenden Objekts (2) entsprechende Bereich in eine Mehrzahl von Teilbereichen (S) unterteilt ist, die nacheinander belichtet werden,
die Belichtung jedes Teilbereichs in zueinander parallelen Vektoren (V) erfolgt, die in einer Vorschubrichtung (RV) nacheinander belichtet werden,
die Abtastrichtungen (RL) zweier benachbarter Vektoren (V) in dem Teilbereich (S) einander entgegengesetzt sind und
die Vorschubrichtung (RV) und die Hauptströmungsrichtung (RG) so aufeinander abgestimmt werden, dass der zwischen ihnen liegende Winkel (β) in einem Bereich zwischen 112,5° und 247,5° liegt, vorzugsweise zwischen 135° und 225°, in weiter bevorzugter Weise zwischen 150° und 210°.

3. Verfahren gemäß Anspruch 1, bei dem
der dem Querschnitt des herzustellenden Objekts (2) entsprechende Bereich in eine Mehrzahl von Teilbereichen (S) unterteilt ist, die nacheinander belichtet werden,
die Belichtung jedes Teilbereichs in zueinander parallelen Vektoren (V) erfolgt,
die Abtastrichtungen (RL) aller Vektoren (V) in dem Teilbereich (S) im Wesentlichen gleich sind,
die Vorschubrichtung (RV) und die Hauptströmungsrichtung (RG) so aufeinander abgestimmt werden, dass der zwischen ihnen liegende Winkel (β) zwischen 22,5° und 337,5° liegt, vorzugsweise zwischen 45° und 315°, in weiter bevorzugter Weise zwischen 60° und 300°, und
die Abtastrichtung (RL) und die Hauptströmungsrichtung (RG) so aufeinander abgestimmt werden, dass der Winkel zwischen Ihnen größer gleich 90° ist.

4. Verfahren gemäß Anspruch 1, bei dem
das Belichtungsmuster mindestens eines Bereichs in einer Schicht relativ zu dem Belichtungsmuster mindestens eines Bereichs der vorigen Schicht um einen vorbestimmten Winkel gedreht wird und
die Abtastrichtung (RL) und die Hauptströmungsrichtung (RG) dadurch aufeinander abgestimmt werden,
dass ein Belichtungsmuster, das nicht an die Hauptströmungsrichtung (RG) angepasst ist, übersprungen wird und stattdessen das nächste vorgesehene Belichtungsmuster ausgeführt wird oder
dass die Abtastrichtung (RL) geändert wird, vorzugsweise entgegengesetzt der vorgesehenen Abtastrichtung.

5. Verfahren gemäß Anspruch 1, bei dem
das Belichtungsmuster mindestens eines Bereichs in einer Schicht relativ zu dem Belichtungsmuster mindestens eines Bereichs der vorigen Schicht um einen vorbestimmten Winkel gedreht wird,
der dem Querschnitt des herzustellenden Objekts (2) entsprechende Bereich in eine Mehrzahl von Teilbereichen (S) unterteilt ist, die nacheinander belichtet werden,
die Belichtung jedes Teilbereichs in zueinander parallelen Vektoren (V) erfolgt, die in einer Vorschubrichtung (RV) nacheinander belichtet werden, und
die Abtastrichtung (RL) und die Hauptströmungsrichtung (RG) so aufeinander abgestimmt werden, dass, wenn in einer Schicht der Winkel (β) zwischen der Vorschubrichtung (RV) und der Hauptströmungsrichtung (RG) zwischen 112,5° und 247,5° liegt, vorzugsweise zwischen 135° und 225° und in weiter bevorzugter Weise zwischen 150° und 210°, die Abtastrichtungen (RL) zweier benachbarter Vektoren (V) in einem Teilbereich (S) in dieser Schicht einander entgegengesetzt sind.

6. Verfahren gemäß Anspruch 1, bei dem
das Belichtungsmuster mindestens eines Bereichs in einer Schicht relativ zu dem Belichtungsmuster mindestens eines Bereichs der vorigen Schicht um einen vorbestimmten Winkel gedreht wird,
der dem Querschnitt des herzustellenden Objekts (2) entsprechende Bereich in eine Mehrzahl von Teilbereichen (S) unterteilt ist, die nacheinander belichtet werden,
die Belichtung jedes Teilbereichs in zueinander parallelen Vektoren (V) erfolgt, die in einer Vorschubrichtung (RV) nacheinander belichtet werden, und
die Abtastrichtung (RL) und die Hauptströmungsrichtung (RG) so aufeinander abgestimmt werden, dass, wenn in einer Schicht der Winkel (β) zwischen der Vorschubrichtung (RV) und der Hauptströmungsrichtung (RG) zwischen 22,5° und 337,5° liegt, vorzugsweise zwischen 45° und 315° und in weiter bevorzugter Weise zwischen 60° und 300°, die Abtastrichtungen (RL) aller Vektoren (V) in einem Teilbereich (S) in dieser Schicht gleich sind und diese gemeinsame Abtastrichtung (RL) und die Hauptströmungsrichtung (RG) so aufeinander abgestimmt sind, dass der Winkel zwischen Ihnen zwischen 90° und 270° liegt.

7. Verfahren gemäß Anspruch 1, bei dem
das Belichtungsmuster mindestens eines Bereichs in einer Schicht relativ zu dem Belichtungsmuster mindestens eines Bereichs der vorigen Schicht um einen vorbestimmten Winkel gedreht wird,
der dem Querschnitt des herzustellenden Objekts (2) entsprechende Bereich in eine Mehrzahl von Teilbereichen (S) unterteilt ist, die nacheinander belichtet werden,
die Belichtung jedes Teilbereichs in zueinander parallelen Vektoren (V) erfolgt, die in einer Vorschubrichtung (RV) nacheinander belichtet werden,
die Abtastrichtung (RL) und die Hauptströmungsrichtung (RG) so aufeinander abgestimmt werden, dass, wenn in einer Schicht der Winkel (β) zwischen der Vorschubrichtung (RV) und der Hauptströmungsrichtung (RG) zwischen 0° und 60° oder zwischen 300° und 360° liegt, vorzugsweise zwischen 0° und 45° oder zwischen 315° und 360° und in weiter bevorzugter Weise zwischen 0° und 22,5° oder zwischen 337,5° und 360°, das Belichtungsmuster übersprungen wird und stattdessen das nächste vorgesehene Belichtungsmuster ausgeführt wird oder dass die Vorschubrichtung (RV) geändert wird, vorzugsweise entgegengesetzt der vorgesehenen Vorschubrichtung.

8. Verfahren gemäß einem der Ansprüche 2, 3, 5, 6 und 7, bei dem
die Teilbereiche zueinander parallele längliche Streifen (S) sind und
die zueinander parallelen Vektoren (V), in denen die Belichtung jedes Streifens erfolgt, im Wesentlichen senkrecht zu der Längsrichtung des Streifens liegen.

9. Verfahren gemäß einem der Ansprüche 1 bis 8, bei dem
mehrere aneinandergrenzende oder von einander beabstandete Teilbereiche (2a-2d) des zu verfestigenden Querschnitts aufeinanderfolgend belichtet werden und
die Reihenfolge der Belichtung der Teilbereiche (2a-2d) entgegen der Hauptströmungsrichtung RG erfolgt, so dass zuerst die Teilbereiche (2a) belichtet werden, die am weitesten in Richtung der Hauptströmungsrichtung RG angeordnet sind, und zuletzt die Teilbereiche (2b), die am wenigsten weit in Richtung der Hauptströmungsrichtung RG angeordnet sind.

10. Vorrichtung zum Herstellen eines dreidimensionalen Objektes durch schichtweises Aufbringen und selektives Verfestigen eines pulverförmigen Aufbaumaterials durch Einwirkung von Energie, mit
einem Träger (6), auf dem das Objekt (2) aufgebaut wird,
einem Beschichter (12) zum Aufbringen einer Schicht des Aufbaumaterials (11) auf den Träger oder eine zuvor zumindest selektiv verfestigte Schicht des Aufbaumaterials,
einer Energiequelle (13) zum Einbringen eines Energiestrahls (14) in die aufgetragene Schicht des Aufbaumaterials (11),
einer Abtastvorrichtung (15, 16) zum Abtasten der einem Querschnitt des herzustellenden Objektes (2) entsprechenden Stellen der aufgetragenen Schicht mit dem Energiestrahl (14) zum selektiven Verfestigen des pulverförmigen Aufbaumaterials (11),
einer Vorrichtung zum Erzeugen eines Gasstroms (20) in einer Hauptströmungsrichtung (RG) über die aufgetragene Schicht während des Abtastens mit dem Energiestrahl (14), und
einer Steuereinheit (20) zum Steuern des Auftragens einer Schicht und der Einbringung von Energie,
wobei die Steuereinheit vorzugsweise eine CPU enthält, deren Betrieb durch ein Computerprogramm steuerbar ist,
**dadurch gekennzeichnet, dass** die Steuereinheit daran angepasst ist, die Vorrichtung zum Durchführen eines Verfahrens nach einem der Ansprüche 1 bis 9 zu steuern.

11. Vorrichtung gemäß Anspruch 10, bei der die Vorrichtung zum Erzeugen eines Gasstroms (20) zumindest eine Blasdüse (22) und/oder zumindest eine Saugdüse enthält.

12. Vorrichtung gemäß Anspruch 11, bei der die Vorrichtung zum Erzeugen eines Gasstroms (20) eine Mehrzahl von Blasdüsen (22) und/oder die Mehrzahl von Saugdüsen enthält.

13. Vorrichtung gemäß Anspruch 12, bei der die Mehrzahl von Blasdüsen (22) und/oder die Mehrzahl von Saugdüsen ringförmig angeordnet sind und selektiv geschaltet werden können zum Ändern der Hauptströmungsrichtung (RG) des Gasstroms (20).

14. Vorrichtung gemäß einem der Ansprüche 10 bis 13, bei der die Vorrichtung zum Erzeugen eines Gasstroms (20) drehbar angeordnet ist zum Ändern der Hauptströmungsrichtung (RG) des Gasstroms (20).

15. Computerprogramm, das in der Lage ist, wenn es ausgeführt wird, eine Vorrichtung zum Herstellen eines dreidimensionalen Objektes durch schichtweises Aufbringen und selektives Verfestigen eines pulverförmigen Aufbaumaterials durch Einwirkung von Energie so zu steuern, dass sie ein Verfahren nach einem der Ansprüche 1 bis 9 durchführt.

## Claims

1. A method for producing a three-dimensional object (2) by applying, layer by layer, and selectively solidifying a pulverulent build material (11) through the action of energy, comprising the steps:
applying a layer of the pulverulent build material (11) onto a carrier (6) or onto a previously applied and at least selectively solidified layer of the build material,
scanning the locations of the applied layer that correspond to a cross section of the object (2) to be produced using an energy beam (14) from an energy source (13) for selectively solidifying the pulverulent build material (11), and
conducting a gas flow (20) in a main flow direction (RG) over the applied layer during the scanning with the energy beam (14),
**characterized in that** the scanning direction (RL) of the energy beam (14) and the main flow direction (RG) of the gas flow (20) are matched to one another at least in a region of the cross section to be solidified in a manner that for a given main flow direction (RG), the scanning direction (RL) is selected correspondingly and/or that for a given scanning direction (RL), the main flow direction (RG) is adapted to this scanning direction (RL),
wherein the scanning direction (RL) of the energy beam (14) and the main flow direction (RG) of the gas flow (20) are matched to one another such that an angle (γ) located between them lies in a range between 22.5° and 337.5°, preferably between 45° and 315°, more preferably between 60° and 300°, and even more preferably between 90° and 270°.

2. The method according to claim 1, wherein
the region corresponding to the cross section of the object (2) to be produced is divided into a plurality of partial regions (S) which are exposed successively,
each partial region is exposed in mutually parallel vectors (V) which are exposed successively in a feed direction (RV),
the scanning directions (RL) of two neighboring vectors (V) in the partial region (S) are mutually opposed, and
the feed direction (RV) and the main flow direction (RG) are matched to one another such that an angle (β) located between them lies in a range between 112.5° and 247.5°, preferably between 135° and 225°, more preferably between 150° and 210°.

3. The method according to claim 1 or 2, wherein
the region corresponding to the cross section of the object (2) to be produced is divided into a plurality of partial regions (S) which are exposed successively,
each partial region is exposed in mutually parallel vectors (V),
the scanning directions (RL) of all vectors (V) in the partial region (S) are substantially the same,
the feed direction (RV) and the main flow direction (RG) are matched to one another such that an angle (β) located between them lies in a range between 22.5° and 337.5°, preferably between 45° and 315°, more preferably between 60° and 300°, and
the scanning direction (RL) and the main flow direction (RG) are matched to one another such that the angle between them is greater than or equal to 90°.

4. The method according to claim 1, wherein
the exposure pattern of at least one region in a layer is rotated by a specified angle relative to the exposure pattern of at least one region of the previous layer, and
the scanning direction (RL) and the main flow direction (RG) are matched to one another in a manner
that an exposure pattern which is not matched to the main flow direction (RG) is skipped and instead the next intended exposure pattern is carried out, or
that the scanning direction (RL) is changed, preferably opposite to the intended scanning direction.

5. The method according to claim 1, wherein
the exposure pattern of at least one region in a layer is rotated by a specified angle relative to the exposure pattern of at least one region of the previous layer,
the region corresponding to the cross section of the object (2) to be produced is divided into a plurality of partial regions (S) which are exposed successively,
each partial region is exposed in mutually parallel vectors (V) which are exposed successively in a feed direction (RV), and
the scanning direction (RL) and the main flow direction (RG) are matched to one another such that, if the angle (β) between the feed direction (RV) and the main flow direction (RG) in a layer lies between 112.5° and 247.5°, preferably between 135° and 225°, and more preferably between 150° and 210°, the scanning directions (RL) of two neighboring vectors (V) in a partial region (S) in this layer are mutually opposed.

6. The method according to claim 1, wherein
the exposure pattern of at least one region in a layer is rotated by a specified angle relative to the exposure pattern of at least one region of the previous layer,
the region corresponding to the cross section of the object (2) to be produced is divided into a plurality of partial regions (S) which are exposed successively,
each partial region is exposed in mutually parallel vectors (V) which are exposed successively in a feed direction (RV), and
the scanning direction (RL) and the main flow direction (RG) are matched to one another such that, if the angle (β) between the feed direction (RV) and the main flow direction (RG) in a layer lies between 22.5° and 337.5°, preferably between 45° and 315° and more preferably between 60° and 300°, the scanning directions (RL) of all vectors (V) in a partial region (S) in this layer are the same and this common scanning direction (RL) and the main flow direction (RG) are matched to one another such that the angle between them lies between 90° and 270°.

7. The method according to claim 1, wherein
the exposure pattern of at least one region in a layer is rotated by a specified angle relative to the exposure pattern of at least one region of the previous layer,
the region corresponding to the cross section of the object (2) to be produced is divided into a plurality of partial regions (S) which are exposed successively,
each partial region is exposed in mutually parallel vectors (V) which are exposed successively in a feed direction (RV), and
the scanning direction (RL) and the main flow direction (RG) are matched to one another such that, if the angle (β) between the feed direction (RV) and the main flow direction (RG) in a layer lies between 0° and 60° or between 300° and 360°, preferably between 0° and 45° or between 315° and 360°, and more preferably between 0° and 22.5° or between 337.5° and 360°, the exposure pattern is skipped and instead the next intended exposure pattern is carried out or that the feed direction (RV) is changed, preferably opposite to the intended feed direction.

8. The method according to one of claims 2, 3, 5, 6 and 7, wherein
the partial regions are mutually parallel elongate stripes (S), and
the mutually parallel vectors (V), in which the exposure of each stripe takes place, are arranged substantially perpendicular to the longitudinal direction of the stripe.

9. The method according to one of claims 1 to 8, wherein
a plurality of adjacent or spaced-apart partial regions (2a-2d) of the cross section to be solidified are exposed successively and
the order of the exposure of the partial regions (2a-2d) runs against the main flow direction RG, such that first the partial regions (2a) which are arranged farthest in the direction of the main flow direction RG, and finally the partial regions (2b) which are arranged closest in the direction of the main flow direction RG are exposed.

10. A device for producing a three-dimensional object by applying, layer by layer, and selectively solidifying a pulverulent build material through the action of energy, comprising
a carrier (6), on which the object (2) is built,
a recoater (12) for applying a layer of the build material (11) onto the carrier or a previously at least selectively solidified layer of the build material,
an energy source (13) for introducing an energy beam (14) into the applied layer of the build material (11),
a scanning device (15, 16) for scanning the locations of the applied layer that correspond to a cross section of the object (2) to be produced with the energy beam (14) for selectively solidifying the pulverulent build material (11),
a device for producing a gas flow (20) in a main flow direction (RG) over the applied layer during the scanning with the energy beam (14), and
a control unit (20) for controlling the application of a layer and the introduction of energy,
wherein the control unit preferably includes a CPU, the operation of which is controllable by a computer program,
**characterized in that** the control unit is adapted for controlling the device for carrying out a method according to one of claims 1 to 9.

11. The device according to claim 10, wherein the device for producing a gas flow (20) includes at least one blowing nozzle (22) and/or at least one intake nozzle.

12. The device according to claim 11, wherein the device for producing a gas flow (20) includes a plurality of blowing nozzles (22) and/or the plurality of intake nozzles.

13. The device according to claim 12, wherein the plurality of blowing nozzles (22) and/or the plurality of intake nozzles is arranged in the shape of a ring and can be selectively switched to change the main flow direction (RG) of the gas flow (20).

14. The device according to one of claims 10 to 13, wherein the device for producing a gas flow (20) is arranged rotatably to change the main flow direction (RG) of the gas flow (20).

15. A computer program which is capable, when executed, of controlling a device for producing a three-dimensional object by applying, layer by layer, and selectively solidifying a pulverulent build material through the action of energy such that it carries out a method according to one of claims 1 to 9.

## Revendications

1. Procédé pour la réalisation d'un objet tridimensionnel (2) par dépôt en couches et solidification sélective d'un matériau de construction pulvérulent (11) sous l'action d'énergie, comprenant les étapes consistant à :
déposer une couche de matériau de construction pulvérulent (11) sur un support (6) ou sur une couche du matériau de construction déposée auparavant et au moins sélectivement solidifiée,
balayer des endroits de la couche déposée correspondant à une section transversale de l'objet à réaliser (2) avec un rayon d'énergie (14) à partir d'une source d'énergie (13) pour la solidification sélective du matériau de construction pulvérulent (11) et
conduire un flux gazeux (20) dans une direction de circulation principale (RG) au-dessus de la couche déposée pendant le balayage avec le rayon d'énergie (14),
**caractérisé en ce que** la direction de balayage (RL) du rayon d'énergie (14) et la direction de circulation principale (RG) du flux gazeux (20) sont harmonisées l'une à l'autre au moins dans une zone de la section transversale à solidifier en sélectionnant de manière correspondante la direction de balayage (RL) lorsque la direction de circulation principale (RG) est prédéfinie et/ou en harmonisant la direction de circulation principale (RG) à ladite direction de balayage (RL) lorsque la direction de balayage (RL) est prédéfinie,
dans lequel la direction de balayage (RL) du rayon d'énergie (14) et la direction de circulation principale (RG) du flux gazeux (20) sont harmonisées l'une à l'autre de telle sorte que l'angle (γ) compris entre les deux réside dans une plage entre 22,5° et 337,5°, de préférence entre 45° et 315°, de manière mieux préférée entre 60° et 300° et de manière encore mieux préférée entre 90° et 270°.

2. Procédé selon la revendication 1, dans lequel
la zone correspondant à la section transversale de l'objet à réaliser (2) est subdivisée en une multitude de zones partielles (S) irradiées les unes après les autres,
l'irradiation de chaque zone partielle s'effectue en vecteurs parallèles (V), irradiés les uns après les autres dans une direction d'avancée (RV),
les directions de balayage (RL) de deux vecteurs adjacents (V) dans la zone partielle (S) sont opposées l'une à l'autre, et
la direction d'avancée (RV) et la direction de circulation principale (RG) sont harmonisées l'une à l'autre de telle sorte que l'angle (β) compris entre les deux réside dans une plage entre 112,5° et 247,5°, de préférence entre 135° et 225°, de manière mieux préférée entre 150° et 210°.

3. Procédé selon la revendication 1, dans lequel
la zone correspondant à la section transversale de l'objet à réaliser (2) est subdivisée en une multitude de zones partielles (S) irradiées les unes après les autres,
l'irradiation de chaque zone partielle s'effectue en vecteurs parallèles (V),
les directions de balayage (RL) de tous les vecteurs (V) dans la zone partielle (S) sont sensiblement identiques, et
la direction d'avancée (RV) et la direction de circulation principale (RG) sont harmonisées l'une à l'autre de telle sorte que l'angle (β) compris entre les deux réside entre 22,5° et 337,5°, de préférence entre 45° et 315°, de manière mieux préférée entre 60° et 300°, et
la direction de balayage (RL) et la direction de circulation principale (RG) sont harmonisées l'une à l'autre de telle sorte que l'angle compris entre les deux est supérieur ou égal à 90°.

4. Procédé selon la revendication 1, dans lequel
le modèle d'irradiation d'au moins une zone dans une couche est tourné à un angle prédéterminé par rapport au modèle d'irradiation d'au moins une zone de la couche précédente, et
la direction de balayage (RL) et la direction de circulation principale (RG) sont harmonisées l'une à l'autre en
sautant un modèle d'irradiation qui n'est pas adapté à la direction de circulation principale (RG) et en exécutant à la place le prochain modèle d'irradiation prévu ou
modifiant la direction de balayage (RL), de préférence à l'opposé de la direction de balayage prévue.

5. Procédé selon la revendication 1, dans lequel
le modèle d'irradiation d'au moins une zone dans une couche est tourné à un angle prédéterminé par rapport au modèle d'irradiation d'au moins une zone de la couche précédente,
la zone correspondant à la section transversale de l'objet à réaliser (2) est subdivisée en une multitude de zones partielles (S) irradiées les unes après les autres,
l'irradiation de chaque zone partielle s'effectue en vecteurs parallèles (V), irradiés les uns après les autres dans une direction d'avancée (RV), et
la direction de balayage (RL) et la direction de circulation principale (RG) sont harmonisées l'une à l'autre de telle sorte que, lorsque dans une couche l'angle (β) compris entre la direction d'avancée (RV) et la direction de circulation principale (RG) réside entre 112,5° et 247,5°, de préférence entre 135° et 225° et de manière mieux préférée entre 150° et 210°, les directions de balayage (RL) de deux vecteurs adjacents (V) dans une zone partielle (S) dans ladite couche sont opposées l'une à l'autre.

6. Procédé selon la revendication 1, dans lequel
le modèle d'irradiation d'au moins une zone dans une couche est tourné à un angle prédéterminé par rapport au modèle d'irradiation d'au moins une zone de la couche précédente,
la zone correspondant à la section transversale de l'objet à réaliser (2) est subdivisée en une multitude de zones partielles (S) irradiées les unes après les autres,
l'irradiation de chaque zone partielle s'effectue en vecteurs parallèles (V), irradiés les uns après les autres dans une direction d'avancée (RV), et
la direction de balayage (RL) et la direction de circulation principale (RG) sont harmonisées l'une à l'autre de telle sorte que, lorsque dans une couche l'angle (β) compris entre la direction d'avancée (RV) et la direction de circulation principale (RG) réside entre 22,5° et 337,5°, de préférence entre 45° et 315°, et de manière mieux préférée entre 60° et 300°, les directions de balayage (RL) de tous les vecteurs (V) dans une zone partielle (S) dans ladite couche sont identiques, et ladite direction de balayage commune (RL) et la direction de circulation principale (RG) sont harmonisées l'une à l'autre de telle sorte que l'angle compris entre les deux réside entre 90° et 270°.

7. Procédé selon la revendication 1, dans lequel
le modèle d'irradiation d'au moins une zone dans une couche est tourné à un angle prédéterminé par rapport au modèle d'irradiation d'au moins une zone de la couche précédente,
la zone correspondant à la section transversale de l'objet à réaliser (2) est subdivisée en une multitude de zones partielles (S) irradiées les unes après les autres,
l'irradiation de chaque zone partielle s'effectue en vecteurs parallèles (V), irradiés les uns après les autres dans une direction d'avancée (RV),
la direction de balayage (RL) et la direction de circulation principale (RG) sont harmonisées l'une à l'autre de telle sorte que, lorsque dans une couche l'angle (β) compris entre la direction d'avancée (RV) et la direction de circulation principale (RG) réside entre 0° et 60° ou entre 300° et 360°, de préférence entre 0° et 45° ou entre 315° et 360° et de manière mieux préférée entre 0° et 22,5° ou entre 337,5° et 360°, on saute le modèle d'irradiation et on exécute à la place le prochain modèle d'irradiation prévu ou on modifie la direction d'avancée (RV), de préférence à l'opposé de la direction d'avancée prévue.

8. Procédé selon l'une des revendications 2, 3, 5, 6, et 7, dans lequel
les zones partielles sont des bandes longitudinales parallèles (S) et
les vecteurs parallèles (V), dans lesquels l'irradiation de chaque bande s'effectue, sont sensiblement perpendiculaires à la direction longitudinale de la bande.

9. Procédé selon l'une des revendications 1 à 8, dans lequel
plusieurs zones partielles juxtaposées ou écartées (2a-2d) de la section transversale à solidifier sont irradiées successivement et
l'ordre d'irradiation des zones partielles (2a-2d) s'effectue contrairement à la direction de circulation principale (RG) de telle sorte que les zones partielles (2a) disposées le plus loin dans le sens de la direction de circulation principale (RG) soient irradiées en premier et les zones partielles (2b) disposées le moins loin dans le sens de la direction de circulation principale (RG) soient irradiées en dernier.

10. Dispositif pour la réalisation d'un objet tridimensionnel par dépôt en couches et solidification sélective d'un matériau de construction pulvérulent sous l'action d'énergie, comprenant
un support (6) sur lequel l'objet (2) est construit,
un enducteur (12) pour le dépôt d'une couche du matériau de construction (11) sur le support ou une couche de matériau de construction au moins sélectivement solidifiée auparavant,
une source d'énergie (13) pour introduire un rayon d'énergie (14) dans la couche de matériau de construction (11) déposée,
un dispositif de balayage (15, 16) pour balayer les endroits de la couche déposée correspondant à une section transversale de l'objet à réaliser (2) avec le rayon d'énergie (14) pour la solidification sélective du matériau de construction (11) pulvérulent,
un dispositif pour la production d'un flux gazeux (20) dans une direction de circulation principale (RG) au-dessus de la couche déposée pendant le balayage avec le rayon d'énergie (14), et
une unité de commande (20) pour la commande du dépôt d'une couche et l'introduction d'énergie,
dans lequel l'unité de commande comprend de préférence une CPU, dont le fonctionnement peut être piloté par un logiciel,
**caractérisé en ce que** l'unité de commande est adaptée pour commander le dispositif pour l'exécution d'un procédé selon l'une des revendications 1 à 9.

11. Dispositif selon la revendication 10, dans lequel le dispositif pour la production d'un flux gazeux (20) comprend au moins une buse de soufflage (22) et/ou au moins une buse d'aspiration.

12. Dispositif selon la revendication 11, dans lequel le dispositif pour la production d'un flux gazeux (20) comprend une multitude de buses de soufflage (22) et/ou une multitude de buses d'aspiration.

13. Dispositif selon la revendication 12, dans lequel la multitude de buses de soufflage (22) et/ou la multitude de buses d'aspiration sont disposées en cercle et peuvent être commutées sélectivement pour la modification de la direction de circulation principale (RG) du flux gazeux (20).

14. Dispositif selon l'une des revendications 10 à 13, dans lequel le dispositif pour la production d'un flux gazeux (20) est disposé rotatif pour la modification de la direction de circulation principale (RG) du flux gazeux (20).

15. Logiciel qui est en mesure, quand il est exécuté, de commander un dispositif pour la réalisation d'un objet tridimensionnel par dépôt en couches et solidification sélective d'un matériau de construction pulvérulent sous l'action de l'énergie de telle sorte qu'il exécute un procédé selon l'une des revendications 1 à 9.
